# EUROPÄISCHE PATENTSCHRIFT

(11) **EP 1 303 835 B1**
(45) Veröffentlichungstag und Bekanntmachung des Hinweises auf die Patenterteilung: **28.12.2005**
(21) Anmeldenummer: 01978248.1
(22) Anmeldetag: 16.07.2001
(51) Int. Cl.: G06K 19/07

(54) **TRAGBARER DATENTRÄGER**
PORTABLE DATA CARRIER
SUPPORT DE DONNEES PORTABLE

(30) Priorität: 17.07.2000 DE 10035094
(43) Veröffentlichungstag der Anmeldung: 23.04.2003
(73) Patentinhaber: Giesecke & Devrient GmbH, 81677 München (DE)
(72) Erfinder: GRAF, Hans, D-83026 Rosenheim (DE); HOHMANN, Arno, 81369 München (DE)
(74) Vertreter: Klunker . Schmitt-Nilson . Hirsch
(86) Internationale Anmeldenummer: PCT/EP2001/008196
(87) Internationale Veröffentlichungsnummer: WO 2002/007079

(56) Entgegenhaltungen:
- EP-A- 0 299 414
- DE-A- 4 138 131
- DE-A- 4 203 748
- DE-A- 19 631 557
- US-A- 4 827 111
- US-A- 4 924 075
- US-A- 5 438 679
- US-A- 5 473 145
- PATENT ABSTRACTS OF JAPAN vol. 1997, no. 02, 28. Februar 1997 (1997-02-28) & JP 08 263601 A (HITACHI LTD), 11. Oktober 1996 (1996-10-11)

## Beschreibung

Die Erfindung betrifft einen tragbaren Datenträger mit Anzeigevorrichtung gemäß dem Oberbegriff des Anspruchs 1, sowie ein Verfahren zum Betrieb gemäβ dem Oberbegriff des Anspruchs 6.

Aus der deutschen Offenlegungsschrift DE-OS 42 03 748 ist ein Verfahren für die Nutzung und Auswertung von wiederaufladbaren Chipkarten bekannt, bei dem Zahlungen mittels einer Chipkarte in einem nichtflüchtigen Speicher der Karte festgehalten werden. Bei jedem Aufladen werden die vorausgegangenen Zahlungsbuchungen gelöscht und der verfügbare Guthabenwert wird abgespeichert. Es ist insbesondere vorgesehen, daß der zuletzt eingegebene bzw. der zuletzt abgebuchte Wert auf einem Display, welches sich auf der Karte befindet, dargestellt wird. Mit einem derartigen Verfahren bzw. einer derartigen Einrichtung soll die Akzeptanz von Börsenchipkarten erhöht werden, da der Benutzer zumindest eine gewisse Kontrolle über seinen aktuellen Guthabenwert bzw. über die letzte Transaktion hat.

Im weiteren ist aus der deutschen Offenlegungsschrift DE-OS 196 31 557 eine Anzeigeeinheit für eine Chipkarte bekannt. Auch dort soll durch die Anzeige des aktuellen Guthabenwertes die Akzeptanz für Börsenchipkarten erhöht werden. Die vorgestellte Chipkarte weist einen Chipkartenprozessor mit Anschlüssen sowie einen Magnetstreifen und ein Feld für eine Hochprägung, wie dies bei Karten üblich ist, auf. Im weiteren ist zur Ansteuerung der Anzeige ein Displaycontroller als separate Einheit implementiert. Zur Stromversorgung, welche für die Anzeige benötigt wird, ist eine Solarzelle vorgesehen.

Eine Chipkarte mit Display und Solarzelle bzw. Batterie gemäß dem Oberbegriff des Anspruchs 1 ist desweiteren aus der Europäischen Offenlegungsschrift EP-A 0 299 414 sowie aus den Patentschriften US-PS 4 827 111, US-PS 4 924 075 und US-PS 5 438 679 bekannt.

Der Nachteil der bekannten Chipkarten besteht darin, daß die Stromversorgung auf einer Chipkarte wegen der geringen Kapazität der zur Verfügung stehenden Energiequellen ein Problem darstellt. Insbesondere hat es sich als problematisch erwiesen, daß durch die vergleichsweise hohe Taktfrequenz des Mikroprozessors der Karte, welche aus Sicherheitsgründen mindestens 1 MHz betragen muß, ein hoher Stromverbrauch die Nutzungsdauer der Energiequelle erheblich einschränkt bzw. die Benutzung von beispielsweise einer Solarzelle in Chipkarten sehr schwierig oder unmöglich macht.

Es ist daher Aufgabe der Erfindung, einen tragbaren Datenträger mit Anzeigevorrichtung anzugeben, der einen geringen Energiebedarf insbesondere für die Anzeigesteuerung bzw. Datenspeicherung aufweist.

Diese Aufgabe wird, durch die Merkmale des Anspruchs 1 gelöst. Ein Verfahren zum Betreiben einer elektronischen Börse gemäß der Erfindung ist in Anspruch 6 angegeben.

Vorteilhafte Ausgestaltungen der Erfindung sind in den abhängigen Ansprüchen angegeben.

Gemäß der Erfindung ist vorgesehen, einen zusätzlichen Speicher, welcher unabhängig vom Mikroprozessor der Karte betrieben werden kann, einzusetzen. In diesen Speicher werden diejenigen Daten abgelegt, welche zur Anzeige freigegeben sind. Dieser zusätzliche Speicher ist der Anzeigeansteuereinheit zugeordnet und somit vom Mikroprozessor der Karte unabhängig. Insbesondere ist es vorteilhaft, daß zur Anzeige der Daten der Mikroprozessor nicht in Betrieb sein muß, d.h. der Energiebedarf kann verringert werden, in dem nur wenige Funktionseinheiten, beispielsweise Taktgenerator, Anzeigesteuerung und Speichereinheit mit Energie versorgt werden müssen.

Als besonders vorteilhaft hat es sich erwiesen, die Anzeigesteuereinheit und damit indirekt auch den zusätzlichen Speicher mit einem eigenen Taktgenerator zu versehen, wobei der mit diesem Taktgenerator erzeugte Systemtakt eine niedrigere Taktfrequenz aufweist als der Systemtakt des Mikroprozessors. Auf diese Weise wird eine weitere Reduzierung des Energiebedarfs für die Anzeige von Daten erreicht.

Es hat sich ferner als vorteilhaft erwiesen, dem nichtflüchtigen Speicher einen Zwischenspeicher vorzuschalten. Da bei der Übertragung der Anzeigedaten vom Mikroprozessor in den Zusatzspeicher die Möglichkeit besteht, daß ein Benutzer die Karte aus dem Terminal entnimmt, während die Daten in den Zusatzspeicher übertragen werden, stellt der Zwischenspeicher eine Sicherheitsstufe dar, welche gewährleistet, daß keine inkonsistenten Daten im Zusatzspeicher abgelegt werden. Die Daten werden aus dem Zwischenspeicher erst dann in den Zusatzspeicher übertragen, wenn sie vollständig vom Speicher des Mikroprozessors übertragen wurden. Die Datenübertragung vom Mikroprozessor in den Zwischenspeicher erfolgt über die serielle Schnittstelle gemäß dem für die Chipkarte vorgesehenen Übertragungsprotokoll. Die Übertragung vom Zwischenspeicher in den Zusatzspeicher kann über eine parallele Schnittstelle erfolgen, wodurch die Zeit für die Übertragung der Daten vom Zwischenspeicher in den Zusatzspeicher sehr gering ist.

Ferner kann die Übertragung auch ohne Energieversorgung durch das Terminal erfolgen, da hierzu die auf der Karte befindliche Energiequelle verwendet werden kann.

Entsprechend einer weiteren vorteilhaften Ausgestaltung der Erfindung handelt es sich bei dem tragbaren Datenträger um eine elektronische Börse, d.h. um eine Börsenchipkarte, bei der auf dem zusätzlichen Speicher neben dem aktuellen, auf der Börse vorhandenen Betrag auch vorangegangene Transaktionsdaten abgelegt sind, so daß diese bei Bedarf vom Benutzer abgerufen werden können.

Vorzugsweise wird die Anzeigesteuereinheit durch einen Schalter betätigt, so daß beispielsweise bei einmaligem Druck auf den Schalter die Anzeigeeinheit aktiviert wird und bei jedem weiteren Druck auf den Schalter jeweils vorangegangene Transaktionsdaten auf der Anzeigeeinheit dargestellt werden. Die Abschaltung der Anzeigeeinheit erfolgt vorzugsweise nach längerer Nichtbenutzung des Schalters.

Die Erfindung sieht weiterhin ein Verfahren zum Betreiben einer elektronischen Börse vor. Gemäß dem erfindungsgemäßen Verfahren werden nach Beendigung einer Transaktion, die wie eine bekannte Transaktion gemäß den vorgesehenen Protokollen abläuft, die Transaktionsdaten vom Speicher des Börsenchips in den separaten, einer Anzeigeeinheit zugeordneten, nichtflüchtigen Speicher kopiert, wobei der separate Speicher und die Anzeigesteuereinheit auf einer Karte angeordnet sind, die auch den Börsenchip enthält und die Karte des weiteren eine eigene Energieversorgung für die Anzeigesteuereinheit und die Anzeige aufweist, um eine vom Betrieb des Börsenchips unabhängige Anzeige der Daten zu ermöglichen. Nach Beendigung des Kopiervorgangs in den separaten Speicher wird von der Anzeigesteuereinheit ein Bestätigungssignal an den Börsenchip gegeben, welches anzeigt, daß die Daten vollständig übertragen wurden. Nach Erhalt dieses ersten Bestätigungssignales sendet der Börsenchip ein zweites Bestätigungssignal an das Terminal. Das Terminal seinerseits zeigt in Folge dieses zweiten Bestätigungssignales auf einer optischen oder akustischen Anzeigeeinheit eine Meldung an, die den Benutzer zur Entnahme der Karte auffordert, wonach die Kommunikation mit dem Terminal beendet wird.

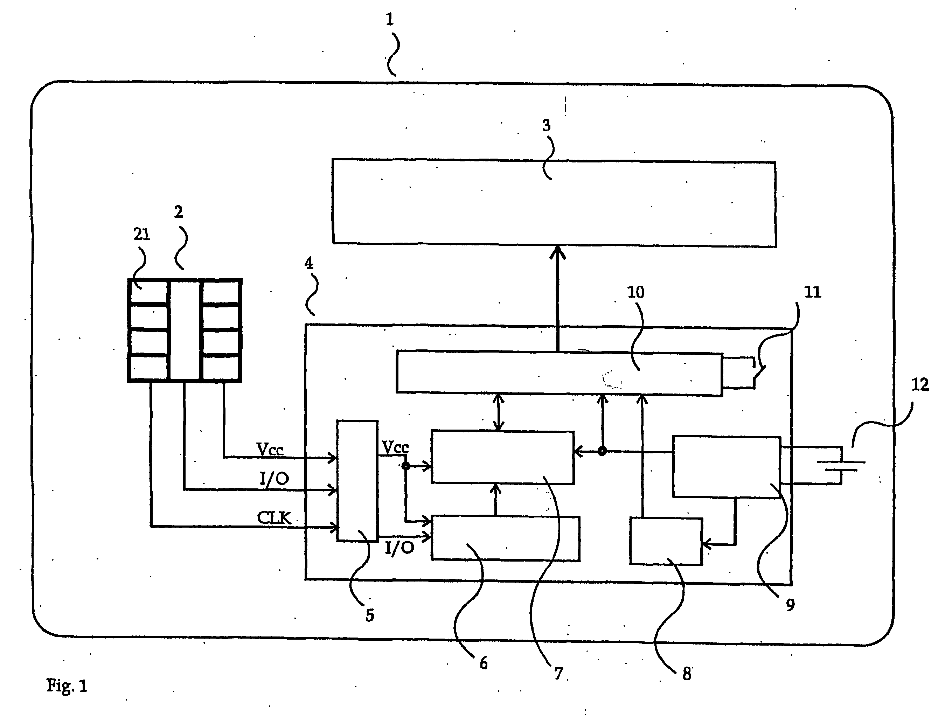

Im folgenden wird die Erfindung anhand der Figur 1, welche den prinzipiellen Aufbau eines erfindungsgemäßen Datenträgers zeigt, näher erläutert.

Die Figur 1 zeigt eine Chipkarte, vorzugsweise eine Börsenchipkarte, bei der ein Börsenchip 2, welcher in einem Modul mit den Kontaktflächen 21 angeordnet ist, enthält.

Im weiteren ist in der Börsenchipkarte 1 eine Anzeigeeinheit 3 enthalten, die von einer separat vom Börsenchip angeordneten Funktionseinheit 4 angesteuert wird. Die Funktionseinheit 4 enthält ein Börsenchip-Interface 5, an die vom Börsenchip eine Datenein-/ausgabeleitung I/O sowie eine Taktversorgungsleitung CLK und eine Stromversorgungsleitung Vcc geführt ist. Vom Börsenchip-Interface 5 führen Verbindungsleitungen zum Zwischenspeicher 6 und von dort zum nichtflüchtigen separaten Speicher 7. Für den Fall, daß der Zwischenspeicher 6 nicht vorgesehen ist, führen die Verbindungsleitungen direkt zum Zusatzspeicher 7. Der Zwischenspeicher 6 ist vorzugsweise als RAM-Speicher ausgeführt, während der separate Speicher 7 als nichtflüchtiger, vorzugsweise E²PROM-Speicher ausgestaltet ist.

Der nichtflüchtige Speicher 7 ist mit der Anzeigesteuereinheit 10 verbunden, welche wiederum die Anzeigeeinheit 3 ansteuert. Auf der Anzeigeeinheit können lediglich die Daten, welche im nichtflüchtigen Speicher 7 abgelegt und somit für die Anzeige freigegeben sind, dargestellt werden.

Die Strom- bzw. Taktversorgung erfolgt über das Analoginterface 9, welches mit einer Energieversorgungseinheit 12, die auf der Karte angeordnet ist, verbunden ist. Die Energieversorgungseinheit 12 kann auch über einen Schalter an das Analoginterface angelegt werden. Die über das Analoginterface zugeführte Energie wird dem nichtflüchtigen Speicher 7 sowie der Anzeigesteuereinheit 10 und dem Taktgenerator 8 zur Verfügung gestellt. Der Taktgenerator 8 dient der Anzeigesteuereinheit 10 zur Taktversorgung. Für die Erfindung wesentlich ist, daß die Steuereinheit 4 zur Ansteuerung der Anzeigeeinheit 3 auch ohne Energieversorgung bzw. ohne Betrieb des Börsenchips, d.h. ohne daß die Karte in ein Terminal eingeführt ist, betrieben werden kann, so daß auf der Anzeigeeinheit Daten dargestellt werden können. Durch die Selbständigkeit der Steuereinheit 4 wird der Energieverbrauch gesenkt und es können ohne weiteres Energiequellen 12 eingesetzt werden, die für die Lebensdauer der Karte 1 die Anzeigeeinheit 3 und deren Steuereinheit 4 mit Energie versorgt. Beispielsweise seien als Energiequellen Folienbatterien, flache Akkus, Piezoelemente oder Solarzellen genannt.

Der Taktgenerator 8, welcher zur Taktversorgung der Ansteuereinheit 10 des separaten Speichers 7 und ggf. des Zwischenspeichers 6 dient, erzeugt gemäß der Erfindung eine Taktfrequenz, die vorzugsweise deutlich unterhalb der Taktfrequenz des Börsenchips liegt. Dadurch kann der Energieverbrauch für die Anzeigeeinheit und deren Ansteuerung nochmals gesenkt werden.

Das Börsenchip-Interface mit den Eingängen Vcc zur Stromversorgung, CLK für den externen Takt und I/O für die Daten. Für den Datenaustausch ist die I/O-Schnittstelle bidirektional oder unidirektional ausgeführt, wobei auch mehrere I/O-Leitungen parallel vorgesehen werden können.

Bei der unidirektionalen Ausführung können Daten des Börsenchips in die Speicher 6 oder 7 geschrieben werden, jedoch ist ein Rückschreiben von Daten in den Börsenchip nicht möglich. Auf diese Weise wird eine Manipulation der Daten, welche im Börsenchip abgelegt sind, verhindert.

Die bidirektionale Ausführung hat dagegen den Vorteil, daß Rückmeldungen bezüglich des Daten-Kopiervorganges von der Steuereinheit 4 an den Börsenchip 2 möglich sind.

Eine weitergehende Sicherheitsvorrichtung für die Datenübertragung ist nicht notwendig, da die auf der Anzeigeeinheit dargestellten Daten, d.h. die Daten, welche vom Börsenchip an die Steuerung 4 übergeben werden, ohnehin nicht geheimhaltungsbedürftig sind.

Über die I/O-Leitung werden die zur Anzeige vorgesehenen Daten über das Börsenchip-Interface 5 an den Zwischenspeicher 6 bzw. den zusätzlichen Speicher 7 gegeben, nachdem eine Transaktion des Börsenchips mit dem Terminal soweit abgeschlossen ist, daß die Transaktionsdaten auf dem Börsenchip aktualisiert sind. Erst nach vollständiger Übertragung der Daten in den zusätzlichen Speicher 7 oder zumindest in den Zwischenspeicher 6 wird dem Terminal mit einem Bestätigungssignal mitgeteilt, daß die Transaktion abgeschlossen ist.

## Patentansprüche

1. Tragbarer Datenträger (1) mit Anzeigevorrichtung (3), umfassend
- einen Mikroprozessor (2) sowie dem Mikroprozessor (2) zugeordnete Speichereinheiten,
- Mittel zur kontaktlosen und/ oder kontaktbehafteten Kopplung mit externen Geräten,
- Mittel (3) zur Anzeige der bzw. einer Auswahl von Daten, welche in den dem Mikroprozessor zugeordneten Speichereinheiten abgelegt sind,
- eine Anzeigesteuereinheit (4) zur Ansteuerung der Anzeigevorrichtung (3),
- eine Energieversorgungseinheit (12), welche die Anzeigevorrichtung (3) und die Anzeigesteuereinheit (4) mit Energie versorgt,
**gekennzeichnet durch**,
- einen vom Mikroprozessor sowie dessen zugeordneter Speichereinheit separat angeordneten nichtflüchtigen Speicher (7), welcher der Anzeigesteuereinheit (4) zugeordnet ist und die zur Anzeige vorgesehenen Daten enthält, um in Verbindung mit der Energieversorgungseinheit (12) Daten unabhängig vom Betrieb des Mikroprozessors (2) anzuzeigen.

2. Tragbarer Datenträger nach Anspruch 1, **dadurch gekennzeichnet, daß** die Anzeigesteuereinheit (4) von einem separaten Taktgenerator (8) mit einem Systemtakt versorgt wird, welcher eine niedrigere Frequenz aufweist als der Systemtakt des Mikroprozessors (2).

3. Tragbarer Datenträger nach Anspruch 1 oder 2, **dadurch gekennzeichnet, daß** dem der Anzeigesteuereinheit (4) zugeordneten nichtflüchtigen Speicher (7) ein Zwischenspeicher (6) vorgeschaltet ist.

4. Tragbarer Datenträger nach einem der Ansprüche 1 bis 3, **dadurch gekennzeichnet, daß** der Mikroprozessor (2) und dessen zugeordnete Speichereinheit zur Ausbildung einer elektronischen Börse vorgesehen sind und in dem separat, der Anzeigesteuereinheit (4) zugeordneten Speicher (7) der aktuelle, auf der Börse vorhandene Betrag sowie vorangegangene Transaktionsdaten abgelegt sind.

5. Tragbarer Datenträger nach einem der Ansprüche 1 bis 4, **dadurch gekennzeichnet, daß** die Anzeigesteuereinheit (4) durch einen Schalter (11) betätigbar ist.

6. Verfahren zum Betreiben einer elektronischen Börse, **dadurch gekennzeichnet, daß**
- vor Beendigung einer Transaktion die Transaktionsdaten vom Speicher eines Börsenchips (2) in einen separaten, einer Anzeigesteuereinheit (4) zugeordneten, nicht-flüchtigen Speicher (7) kopiert werden, wobei der nicht-flüchtige Speicher (7) und die Anzeigesteuereinheit (4) sowie eine Anzeigevorrichtung (3) auf einer Karte (1) angeordnet sind, die auch den Börsenchip (2) beinhaltet, und die Karte (1) eine eigene Energieversorgung für die Anzeigevorrichtung (3) und Anzeigesteuereinheit (4) aufweist, so daß die Anzeige der Daten unabhängig vom Betrieb des Börsenchips (2) erfolgen kann,
- nach Beendigung des Kopiervorgangs ein erstes Bestätigungssignal von der Anzeigesteuereinheit (4) an den Börsenchip (2) gegeben wird,
- der Börsenchip (2) nach Erhalt des ersten Bestätigungssignals seinerseits ein zweites Bestätigungssignal an ein Terminal sendet, und
- das Terminal nach Erhalt des zweiten Bestätigungssignales zur Entnahme der Karte (1) mittels einer optischen oder akustischen Anzeige auffordert.

## Claims

1. A portable data carrier (1) having a display device (3) comprising
- a microprocessor (2) and storage devices associated with the microprocessor (2),
- means (3) for contactless and/or contact-type coupling with external devices,
- means for displaying or selecting data stored in storage devices associated with the microprocessor,
- a display controller (4) for controlling the display device (3),
- an energy supply unit (12) for supplying the display device (3) and the display controller (4) with energy,
**characterized by**
- a nonvolatile memory (7) disposed separately from the microprocessor and its associated storage device, said memory being associated with the display controller (4) and containing the data intended for display in order to display data in connection with the energy supply unit (12) independently of operation of the microprocessor (2).

2. A portable data carrier according to claim 1, **characterized in that** the display controller (4) is supplied by a separate clock generator (8) with a system clock having a lower frequency than the system clock of the microprocessor (2).

3. A portable data carrier according to claim 1 or 2, **characterized in that** the nonvolatile memory (7) associated with the display controller (4) has a buffer (6) upstream thereof.

4. A portable data carrier according to any of claims 1 to 3, **characterized in that** the microprocessor (2) and its associated storage device are provided to form an electronic purse and the separate memory (7) associated with the display controller (4) stores the current amount present in the purse and previous transaction data.

5. A portable data carrier according to any of claims 1 to 4, **characterized in that** the display controller (4) is actuated by a switch (11).

6. A method for operating an electronic purse, **characterized in that**
- before termination of a transaction the transaction data are copied from the memory of a purse chip (2) to a separate, nonvolatile memory (7) associated with a display unit (4), the nonvolatile memory (7) and the display controller (4) as well as a display device (3) being disposed on a card (1) also containing the purse chip (2), and the card (1) having a separate energy supply for the display device (3) and display controller (4) so that data can be displayed independently of operation of the purse chip (2),
- after termination of the copying operation a first acknowledge signal is fed from the display controller (4) to the purse chip (2),
- after receiving the first acknowledge signal the purse chip (2) in turn sends a second acknowledge signal to the terminal, and
- after receiving the second acknowledge signal the terminal asks the user to remove the card (1) by means of an optical or acoustic display.

## Revendications

1. Support de données portable (1) avec un dispositif d'affichage (3), comprenant :
- un microprocesseur (2) ainsi que des unités de mémoire dédiées au microprocesseur (2),
- des moyens de couplage sans contact et/ou équipés de contacts avec des appareils externes,
- des moyens (3) d'affichage de la sélection, ou d'une sélection de données archivées dans les unités de mémoire dédiées au microprocesseur,
- une unité de commande d'affichage (4) pour la commande du dispositif d'affichage (3),
- une unité d'alimentation en courant (12), alimentant en courant le dispositif d'affichage (3) et l'unité de commande d'affichage (4),
**caractérisé par**
- une mémoire (7) non volatile disposée séparément du microprocesseur et de ses unités de mémoire dédiées, laquelle est dédiée à l'unité de commande d'affichage (4) et contient les données destinées à l'affichage, pour afficher les données indépendamment du fonctionnement du microprocesseur (2), en liaison avec l'unité d'alimentation en courant (12).

2. Support de données portable selon la revendication 1, **caractérisé en ce que** l'unité de commande d'affichage (4) est alimentée par un générateur d'horloge (8) séparé avec une impulsion de système présentant une fréquence inférieure à l'impulsion de système du microprocesseur (2).

3. Support de données portable selon la revendication 1 ou 2, **caractérisé en ce qu'**une mémoire tampon (6) est montée en amont de la mémoire (7) non volatile dédiée à l'unité de commande d'affichage (4).

4. Support de données portable selon l'une des revendications 1 à 3, **caractérisé en ce que** le microprocesseur (2) et son unité de mémoire dédiée sont prévus pour la configuration d'une porte-monnaie électronique et **en ce que** le solde de la porte-monnaie actuelle et les données de transactions passées sont archivées dans la mémoire (7) séparément dédiée à l'unité de commande d'affichage (4).

5. Support de données portable selon l'une des revendications 1 à 4, **caractérisé en ce que** l'unité de commande d'affichage (4) est activable par un commutateur (11).

6. Procédé pour la mise en service d'une porte-monnaie électronique,
**caractérisé en ce que** :
- les données de transaction sont copiées, avant l'achèvement d'une transaction de la mémoire, depuis une puce de porte-monnaie (2) vers une mémoire (7) non volatile séparée dédiée à une unité de commande d'affichage (4), la mémoire (7) non volatile, l'unité de commande d'affichage (4) et un dispositif d'affichage (3) étant disposés sur une carte (1) comprenant également la puce de porte-monnaie (2), la carte (1) disposant d'une alimentation en courant propre pour le dispositif d'affichage (3) et l'unité de commande d'affichage (4), de sorte que l'affichage des données peut être effectué indépendamment du fonctionnement de la puce de porte-monnaie (2),
- un premier signal de confirmation est émis à l'issue du processus de copie de l'unité de commande d'affichage (4) vers la puce de porte-monnaie (2),
- la puce de porte-monnaie (2) adresse de son côté un deuxième signal de confirmation à un terminal après réception du premier signal de confirmation,
et **en ce**
- **qu'**après réception du deuxième signal de confirmation, le terminal demande le retrait de la carte (1) au moyen d'une indication optique ou acoustique.
